# EUROPEAN PATENT APPLICATION

(11) **EP 4 579 562 A1**
(43) Date of publication of application: **02.07.2025**
(21) Application number: 23856642.6
(22) Date of filing: 23.08.2023
(51) Int. Cl.: G06Q 30/06

(54) **INTERACTION METHOD AND APPARATUS, ELECTRONIC DEVICE, AND STORAGE MEDIUM**

(30) Priority: 26.08.2022 CN 202211034864
(71) Applicant: BEIJING YOUZHUJU NETWORK TECHNOLOGY CO. LTD., Beijing 101299 (CN)
(72) Inventor: YU, Youjie, Beijing 100028 (CN); XU, Liangcheng, Beijing 100028 (CN)
(74) Representative: Dentons UK and Middle East LLP
(86) International application number: PCT/CN2023/114364
(87) International publication number: WO 2024/041553

(57) **Abstract**

An interaction method and apparatus, an electronic device, and a storage medium. The method comprises: displaying a content sharing page, wherein the content sharing page comprises at least one display region, one display region is used for displaying one piece of experience evaluation information, and the experience evaluation information is used for recommending objects; and in response to a trigger operation on the experience evaluation information, displaying abstract information of a target object in a target display region, wherein the target display region is a display region where the triggered experience evaluation information is located, the target object is an object recommended by the triggered experience evaluation information, and the abstract information comprises at least part of attribute information of the target object.

## Description

This application claims priority to Chinese Patent Application No. 202211034864.6, filed on August 26, 2022, the entire disclosure of which is incorporated herein by reference as part of the present disclosure.

### TECHNICAL FIELD

The present disclosure relates to an interaction method, apparatus, electronic device, and a storage medium.

### BACKGROUND

With the continuous development of Internet records, users can share their own lives with others over Internet. When users share their own lives, they often mention their use experience of some commodities and the like. When other users view the contents shared by sharers, they may often become interested in the commodities mentioned by the sharers and hope to get a more particular knowledge of the commodities. However, there is no way to help other users to get a more particular knowledge of commodities mentioned by sharers in shared contents.

### SUMMARY

In order to solve the above problem or at least partially solve the above technical problem, the present disclosure provides an interaction method, apparatus and electronic device, and a storage medium.

On the first aspect, the present disclosure provides an interaction method, comprising: showing a content sharing page, wherein the content sharing page comprises at least one showing area; one showing area is used for showing one piece of experience assessment information; and the experience assessment information is used for recommending an object; and showing abstract information of a target object in a target showing area in response to a triggering operation for one piece of experience assessment information, wherein the target displaying area is a showing area where the triggered experience assessment information is displayed; the target object is an object recommended by the triggered experience assessment information; and the abstract information comprises at least part of attribute information of the target object.

On the second aspect, the present disclosure further provides an interaction apparatus, comprising: a first showing module configured to show a content sharing page, wherein the content sharing page comprises at least one showing area; one showing area is used for showing one piece of experience assessment information; and the experience assessment information is used for recommending a target object; and a second showing module configured to show abstract information of a target object in a target showing area in response to a triggering operation for one piece of experience assessment information, wherein the target displaying area is a showing area where the triggered experience assessment information is displayed; the target object is an object recommended by the triggered experience assessment information; and the abstract information comprises at least part of attribute information of the target object.

On the third aspect, the present disclosure further provides an electronic device, comprising: one or more processors; and a storage apparatus configured to store one or more programs, wherein the one or more programs, when executed by the one or more processors, cause the one or more processors to implement the above interaction method.

On the fourth aspect, the present disclosure further provides a computer-readable storage medium, storing a computer program which, when executed by a processor, causes the above interaction method.

### BRIEF DESCRIPTION OF DRAWINGS

The accompanying drawings incorporated into the specification and constituting part of the specification illustrate the examples of the present disclosure, and serve, together with the specification, to explain the principles of the present disclosure.

In order to describe embodiments of the present disclosure more clearly, the accompanying drawings required for describing the embodiments will be described briefly below. Apparently, other accompanying drawings can also be derived from these drawings by those of ordinary skill in the art without creative efforts.
Fig. 1 is a flowchart of an interaction method provided by an embodiment of the present disclosure;
Fig. 2 is a schematic diagram of a content sharing page provided by an embodiment of the present disclosure;
Fig. 3 is a schematic diagram of another content sharing page provided by an embodiment of the present disclosure;
Fig. 4 is a schematic diagram of another content sharing page provided by an embodiment of the present disclosure;
Fig. 5 is a schematic diagram of another content sharing page provided by an embodiment of the present disclosure;
Fig. 6 is a schematic diagram of another content sharing page provided by an embodiment of the present disclosure;
Fig. 7 is a schematic diagram of a detail page of a target object provided by an embodiment of the present disclosure;
Fig. 8 is a structural schematic diagram of an interaction apparatus in an embodiment of the present disclosure; and
Fig. 9 is a structural schematic diagram of an electronic device in an embodiment of the present disclosure.

### DETAILED DESCRIPTION

In order to provide a clearer understanding of the objectives, features and advantages of the present disclosure, the solutions in the present disclosure will be further described below. It should be noted that the embodiments in the present disclosure and features in the embodiments may be combined with one another without conflict.

Many specific details are described below to help fully understand the present disclosure. However, the present disclosure may also be implemented in other manners different from those described herein. Apparently, the described examples are merely some rather than all of the examples of the present disclosure.

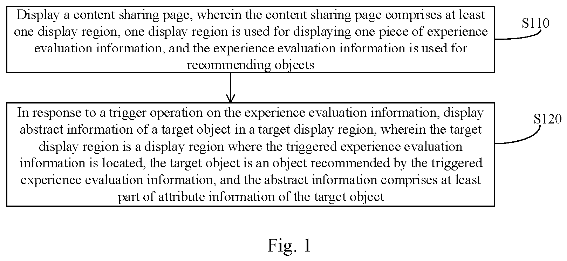

Fig. 1 is a flowchart of an interaction method provided by an embodiment of the present disclosure. The interaction method may be performed by an interaction apparatus. The interaction apparatus may be implemented by software and/or hardware and may be configured in an electronic device, e.g., a terminal, specifically including, but not limited to, a smart phone, a palmtop, a tablet computer, a portable wearable device with a display screen, a desktop computer, a notebook computer, an all-in-one machine, a smart home device, and the like.

As shown in Fig. 1, the interaction method may include:
S110: showing a content sharing page. The content sharing page includes at least one showing area, wherein one showing area is used for showing one piece of experience assessment information; and the experience assessment information is used for recommending an object.

The object refers to an object that a sharer hopes to recommend to and share with a user (a sharee). Optionally, the object is a commodity. In practice, the object may be specifically a physical object or a service.

The experience assessment information is a content that a sharer uses for introducing a shared object so as to share the object with a user. In practice, a sharer may show and introduce an object in the form of an image and/or a text. If the sharer shows the object in the form of an image, the experience assessment information includes the image used by the sharer, and the image may be specifically a video or a picture, or the like. If the sharer shows the object in the form of a text, the experience assessment information includes a text content for describing the use experience of the object used by the sharer.

The content sharing page is a page for showing the experience assessment information.

The content sharing page may be divided into a plurality of showing areas, with one showing area for showing one piece of experience assessment information. The experience assessment information shown in different showing areas may be from the same sharer, or may be from different sharers. The experience assessment information shown in different showing areas may be directed to recommend the same object or to recommend different objects.

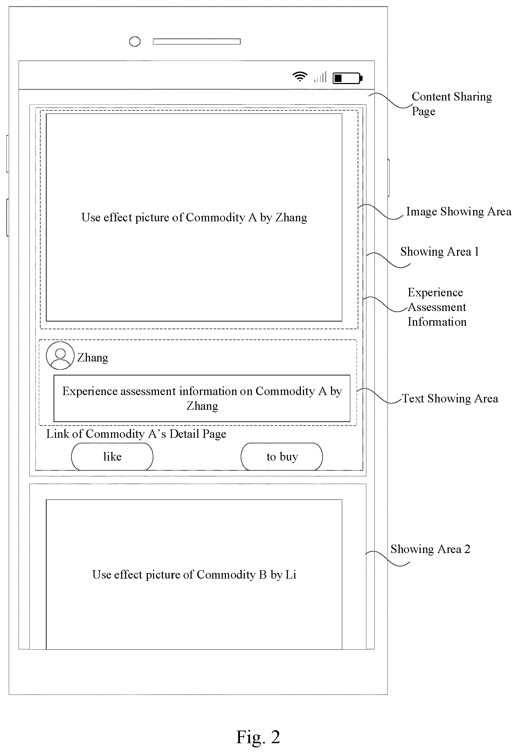

Fig. 2 is a schematic diagram of a content sharing page provided by an embodiment of the present disclosure. With reference to Fig. 2, the content sharing page includes a plurality of showing areas sequentially arranged along a vertical direction. Due to the limitation of a terminal screen size in Fig. 2, only two showing areas are illustrated, which are showing area 1 and showing area 2, respectively, wherein the showing area 1 is completely shown, and the showing area 2 is not completely shown. The user (i.e., the sharee) of the terminal may switch the showing area displayed on the terminal screen by vertically sliding the content sharing page. Exemplarily, the user of the terminal vertically slides the content sharing page such that the upper part of the showing area 1 gradually disappears from the terminal screen, while the lower part of the showing area 1 and the upper part of the showing area 2 move upwards, and the lower part of the showing area 2 gradually appears in the terminal screen until the showing area 2 is completely shown.

Optionally, a size of each showing area is identical to the screen size, and only one showing area is displayed each time.

With continued reference to Fig. 2, each showing area shows one piece of experience assessment information. In the showing area 1, the experience assessment information of the sharer Zhang on commodity A is shown. In the showing area 2, the experience assessment information of the sharer Li on commodity B is shown.

S120: showing abstract information of a target object in a target showing area in response to a triggering operation for one piece of experience assessment information, wherein the target displaying area is a showing area where the triggered experience assessment information is displayed; the target object is an object recommended by the triggered experience assessment information; and the abstract information includes at least part of attribute information of the target object.

The triggering operation refers to a selection operation, a tapping operation, or a sliding operation for the experience assessment information. The triggering operation for the experience assessment information includes a triggering operation for any position in the experience assessment information, or a triggering operation for a specified position or a specified icon in the experience assessment information.

Any object includes a plurality of attributes. The attributes of an object are features the structure or composition of the object has, or features endowed due to the particularity of the features of the structure or composition of the object. If the object is a physical object, its attributes are an identifier, a style, a size, a material, a function, a trademark, a type, a price, a color, a package, popularity, use experience and the like of the object. If the object is a service, its attributes are a content included in the service, matters needing attention, etc. The attributes of the object are main stimuli that can affect a user's cognition, emotion, and behaviors. The attribute information of the object is information for describing the attributes of the object. The attribute information of the object enables a user to rapidly understand, select and purchase the object.

The abstract information is a set formed by gathering part of attribute information of the target object. The abstract information may show the attribute information of the target object in the form of an image and/or a text.

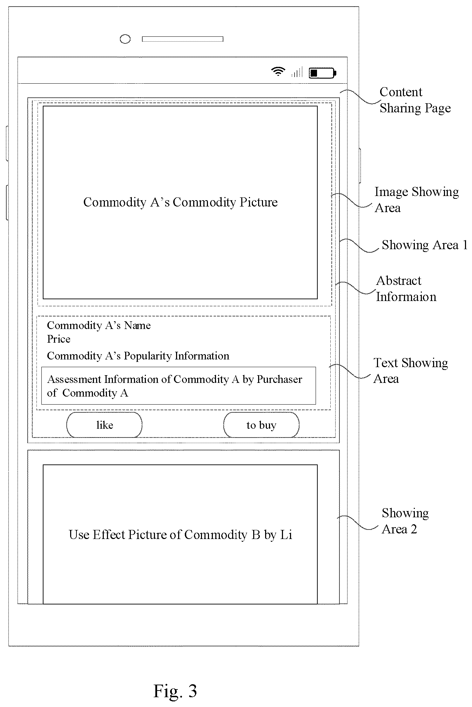

Fig. 3 is a schematic diagram of another content sharing page provided by an embodiment of the present disclosure. With continued reference to Fig. 2, the terminal shows the content sharing page. The user can browse various experience assessment information in the content sharing page. In the process of browsing the content sharing page, if the user becomes interested in the object recommended by the experience assessment information in the showing area 1, the user can perform a triggering operation on the experience assessment information in the showing area 1 (e.g., transversely slide the experience assessment information). Since the triggered experience assessment information is used for recommending commodity A, as shown in Fig. 3, the terminal shows the abstract information of the commodity A in the showing area 1 in response to the triggering operation.

It needs to be noted that when the user triggers a certain piece of experience assessment information, the triggered experience assessment information is replaced with the abstract information, and the other experience assessment information is not replaced. Exemplarily, by comparing Fig. 2 to Fig. 3, since the user triggers the experience assessment information in the showing area 1, only the experience assessment information in the showing area 1 is replaced with the abstract information, and the experience assessment information in the showing area 2 remains unchanged.

Optionally, the experience assessment information and the abstract information are not shown in the target showing area simultaneously.

In the above technical solutions, the content sharing page is set. The content sharing page includes at least one showing area; one showing area is used for showing one piece of experience assessment information; and the experience assessment information is used for recommending the object. The abstract information of the target object is shown in the target showing area in response to the triggering operation for one piece of experience assessment information. The target showing area is the showing area where the triggered experience assessment information is displayed; the target object is the object recommended by the triggered experience assessment information; and the abstract information includes at least part of attribute information of the target object. Compared with the experience assessment information, the abstract information may further introduce the commodity recommended by the experience assessment information from other sides or other angles, which can make up for the deficiency of a finite quantity of information conveyed by the experience assessment information, the above technical solution provides a way that can help the user to further understand the commodity mentioned in the content shared by the sharer and meets the requirement of the user for further understanding the commodity mentioned in the content shared by the sharer.

On the basis of the above technical solution, optionally, the target showing area includes an image showing area and a text showing area. The experience assessment information includes first image information and first text information. The abstract information includes second image information and second text information. Showing the abstract information of the target object in the target showing area includes: replacing the first image information shown in the image showing area with the second image information; and replacing the first text information shown in the text showing area with the second text information. The purpose of doing so is to further divide the showing area into the image showing area and the text showing area. No matter whether it is during the process of showing the experience assessment information or during the process of showing the abstract information, the image showing area is merely used for showing the image information, and the text showing area is merely used for showing the text information. In this way, no matter whether the showing area shows the experience assessment information or the abstract information, the entire showing style tends to be consistent such that the whole content sharing page is harmonious and beautiful.

Further, if the target object is a commodity, the first image information includes a use effect picture of the commodity provided by a first terminal; the first text information includes use experience text information of the commodity provided by the first terminal; the second image information includes a picture of the commodity provided by a second terminal; and the second text information includes at least one of identification information, popularity information, and assessment information of the commodity provided by the second terminal.

The first terminal may be a terminal used by the sharer. The sharer may be specifically an icon, an influencer, or a user of a common sharing application. Alternatively, the first terminal is an artificial intelligence device. Exemplarily, if the target object is wind coat, the first image information is a try-on effect picture of an icon trying on the wind coat. The first text information is experience description information written by the icon for the wind coat in the form of a text, e.g., "its pattern is good, and it looks pretty nice when I wear it. My friends asked me for its link".

The second terminal is a terminal used by a commodity seller. The identification information refers to information capable of distinguishing from other commodities, such as an article number of the commodity or a name of the commodity. The popularity information refers to information capable of indicating a popularity degree of the commodity, such as a number of times the commodity is paid attention to, a number of times the commodity is favorited, a number of times the commodity is bought, a number of comments for the commodity, a number of times the commodity is shared, a number of times that commodity is browsed, a number of consultations or a number of likes for the commodity. The assessment information is provided by a commodity buyer for the commodity seller.

Here, it needs to be noted that the use experience text information is provided by the first terminal for the purpose of recommending the commodity for users. The use experience text information is not submitted to the commodity seller after being formed. The assessment information is an assessment result fed back by the commodity buyer for the bought commodity to the commodity seller after buying the commodity. Subsequently, the assessment result is given by the commodity seller to the terminal showing the content sharing page. That is, a biggest difference between the use experience text information and the assessment information is that their sources are different.

In the above technical solution, S120 may be changed to: if the experience assessment information currently shown in the target showing area includes at least two pieces of first image information and a last piece of first image information of the experience assessment information is currently being shown in the target showing area, showing the abstract information of the target object in the target showing area in response to a triggering operation for the last piece of first image information.

The first image information is image information of the use effect of the commodity provided by the sharer. One piece of first image information refers to one video or one picture.

The triggering operation for the last piece of first image information includes a triggering operation for any position in the last piece of first image information, or a triggering operation for a specified position or a specified icon in the last piece of first image information.

Exemplarily, it is assumed that a certain piece of experience assessment information is used for recommending a dress. In order to achieve the best recommendation effect, a sharer provides three pictures, which are effect pictures shot by the sharer wearing the dress from different angles. Based on the three pictures provided by the sharer, the experience assessment information C including three pieces of first image information can be obtained, each picture being one piece of first image information. The three pieces of first image information included in the experience assessment information C are first image information C1, first image information C2, and first image information C3. In the image showing area of the target showing area, it is only allowed to show one piece of first image information each time.

Optionally, when the experience assessment information includes a plurality of pieces of first image information, the target showing area further shows a first number identifier while showing the experience assessment information. The first number identifier is in the form of "n/m", wherein n represents that an n-th piece of first image information is currently shown in the image showing area, and the experience assessment information includes a total of m pieces of first image information.

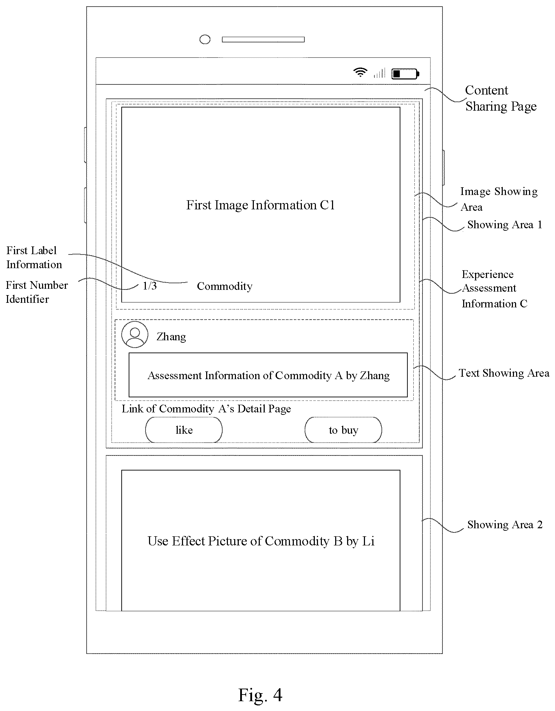

Fig. 4 is a schematic diagram of another content sharing page provided by an embodiment of the present disclosure. With reference to Fig. 4, the showing area 1 is the target showing area which is showing the experience assessment information C. At this point, the first image information C1 is being shown in the image showing area. Since the first image information C1 is a first piece of first image information, the experience assessment information C includes a total of 3 pieces of first image information. In Fig. 4, the first number identifier is expressed as "1/3".

When the user performs a triggering operation on the first image information C1 (the user uses a finger to press on the first image information C1 and then swipes leftwards), the first image information shown in the image showing area is switched such that after switching, the first image information C2 is shown in the image showing area, and the first image information C1 is no longer shown. At this point, the first number identifier is changed from "1/3" to "2/3".

When the user performs a triggering operation on the first image information C2 (the user uses a finger to press on the first image information C2 and then swipes leftwards), the first image information shown in the image showing area is switched such that after switching, the first image information C3 is shown in the image showing area, and the first image information C2 is no longer shown. At this point, the first number identifier is changed from "2/3" to "3/3".

When the user performs a triggering operation on the first image information C3 (the user uses a finger to press on the first image information C3 and then swipes leftwards), since the first image information C3 is the last piece of first image information, the experience assessment information C is switched such that after switching, the target showing area shows the abstract information of the dress.

Since the role of the experience assessment information is to stimulate the interest of the user in the recommended object and influence the user with the recommended object, the abstract information is a way provided for further understanding the recommended object in order to meet a requirement of the user for further understanding the recommended object after the user becomes interested in the recommended object. Apparently, the setting of showing the abstract information of the target object in the target showing area in response to the triggering operation for the last piece of first image information when the last piece of first image information of the experience assessment information is currently being shown in the target showing area can ensure that the abstract information is displayed after all the experience assessment information has been displayed completely, and the user's interest in the recommended object can be fully stimulated.

In Fig. 4, the first number identifier is located at the left bottom of the image showing area, which is a specific example of the present disclosure rather than a limiting of the present disclosure. In practice, the first number identifier may be any position of the target showing area.

On the basis of the above technical solution, if the experience assessment information includes first label information, S120 may also be changed to: showing the abstract information of the target object in the target showing area in response to a triggering operation for the first label information in one piece of experience assessment information.

The first label information refers to an icon for realizing switching from the experience assessment information to the abstract information.

The triggering operation for the first label information includes operations such as tapping and sliding on the first label information.

Exemplarily, it is also assumed that a certain piece of experience assessment information is used for recommending a dress. In order to achieve the best recommendation effect, a sharer provides three pictures, which are effect pictures shot by the sharer wearing the dress from different angles. Based on the three pictures provided by the sharer, the experience assessment information C including three pieces of first image information can be obtained, each picture being one piece of first image information. The three pieces of first image information included in the experience assessment information C are first image information C1, first image information C2, and first image information C3. In the image showing area of the target showing area, it is only allowed to show one piece of first image information each time.

With continued reference to Fig. 4, the experience assessment information C is currently being shown in the target showing area (i.e., the showing area 1), and the first image information C1 is being shown in the image showing area. The experience assessment information includes a "commodity" label which is the first label information. When the user triggers the "commodity" label (e.g., taps on the "commodity" label), the experience assessment information C is entirely switched such that after switching, the target showing area shows the abstract information of the dress, and the experience assessment information C is no longer shown.

It also needs to be noted that in this solution, no matter which one of the first image information C1, the first image information C2, and the first image information C3 is being shown in the image showing area at this point, the experience assessment information C will be entirely switched as long as the user triggers the first label information (i.e., the "commodity" label), such that after switching, the target showing area shows the abstract information of the dress.

In the above technical solution, the first label information plays a role in guiding so that the user can explicitly switch from the experience assessment information to the abstract information. Therefore, since the experience assessment information includes the first label information and the abstract information of the target object is shown in the target showing area in response to the triggering operation for the first label information in the experience assessment information, rapid switching from the experience assessment information to the abstract information can be achieved.

For the case where the experience assessment information includes a plurality of pieces of first image information, since the experience assessment information can be directly switched to the abstract information by triggering the first label information when the first image information is not all shown, the step of firstly showing the first image information and then switching from the experience assessment information to the abstract information does not need to be performed, and rapid switching from the experience assessment information to the abstract information can be further achieved.

Further, if the experience assessment information is used for recommending at least two target objects, the experience assessment information may include at least two pieces of first label information that are in one-to-one correspondence with the target objects. Showing the abstract information of the target object in the target showing area in response to the triggering operation for the first label information in one piece of experience assessment information includes: in response to a triggering operation for one piece of first label information in one piece of experience assessment information, showing the abstract information of the target object corresponding to the triggered first label information shown in the target showing area. This can help the user to conveniently and rapidly switch the experience assessment information to the abstract information of a certain specific target object that the user is interested in.

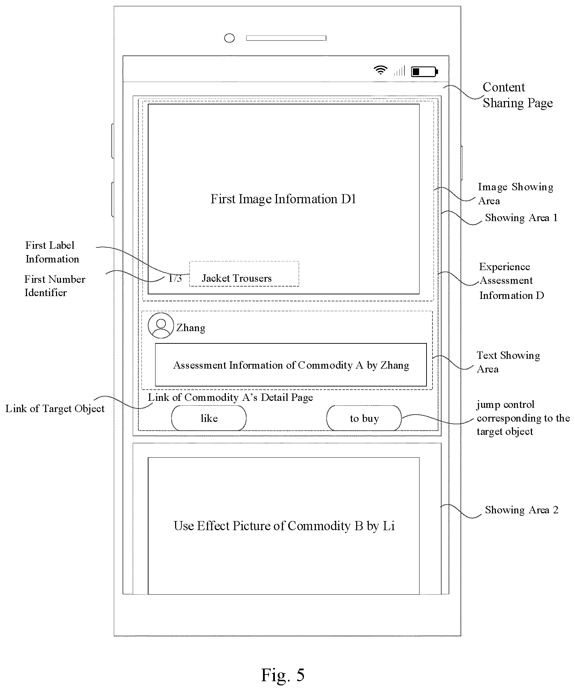

Fig. 5 is a schematic diagram of another content sharing page provided by an embodiment of the present disclosure. With reference to Fig. 5, the showing area 1 shows the experience assessment information D which is used for recommending jackets and trousers. The experience assessment information D includes two pieces of first label information, which are a "jacket" label and a "trousers" label, respectively. If the user triggers the "jacket" label, the experience assessment information D is entirely switched such that after switching, the showing area 1 shows the abstract information of the jacket. If the user triggers the "trousers" label, the experience assessment information D is entirely switched such that after switching, the showing area 1 shows the abstract information of the trousers.

In another embodiment, if the abstract information is currently being shown in the target showing area and the abstract information includes second label information, the interaction method further includes: switching the abstract information shown in the target showing area to the experience assessment information in response to a triggering operation for the second label information in the abstract information.

The second label information refers to an icon for realizing switching from the abstract information to the experience assessment information.

The triggering operation for the second label information includes operations such as tapping and sliding on the second label information.

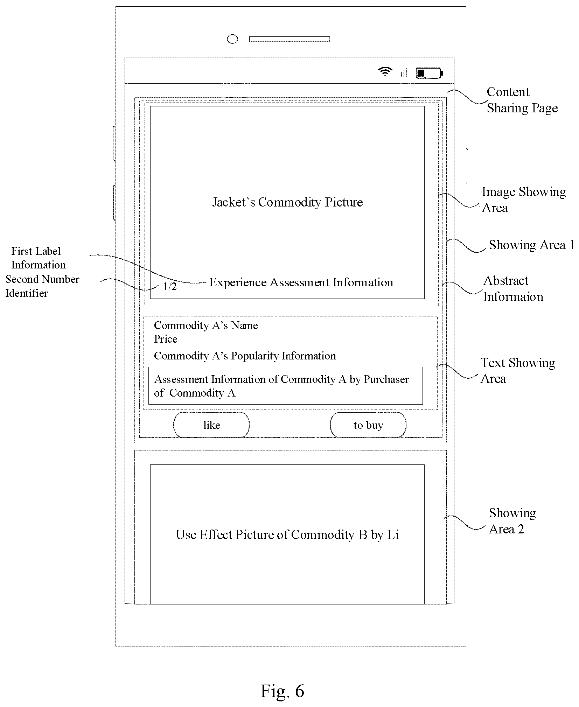

Fig. 6 is a schematic diagram of another content sharing page provided by an embodiment of the present disclosure. With reference to Fig. 5, the showing area 1 is showing the experience assessment information D, and the experience assessment information D includes the "jacket" label (i.e., the first label information). The user triggers the "jacket" label, and the experience assessment information D is entirely switched such that after switching, the showing area 1 shows the abstract information of the jacket. With continued reference to Fig. 6, the abstract information of the jacket includes an "experience assessment information" label (i.e., the second label information). The user triggers the "experience assessment information" label, the abstract information of the jacket is entirely switched such that after switching, the experience assessment information D is shown in the target showing area again.

In another embodiment, if the triggered experience assessment information is used for recommending at least two target objects and the abstract information of one of the target objects is currently being shown in the target showing area, the interaction method further includes: switching the abstract information shown in the target showing area in response to a switching operation for the abstract information, wherein the abstract information before switching and the abstract information after switching correspond to different target objects, respectively.

The switching operation refers to a selection operation, a tapping operation, or a sliding operation for the abstract information. The switching operation for the abstract information includes a switching operation for any position in the abstract information, or a switching operation for a specified position or a specified icon in the abstract information.

Exemplarily, if the experience assessment information D is used for recommending two commodities: jacket and trousers, the abstract of the jacket is currently being shown in the target showing area. When the user switches the abstract information of the jacket (e.g., transversely slides the abstract information of the jacket), after switching, the abstract information of the trousers is shown in the target showing area, and the abstract information of the jacket is no longer shown.

Optionally, if the triggered experience assessment information is used for recommending at least two target objects and each target object corresponds to one piece of abstract information, the triggered experience assessment information corresponds to at least two pieces of abstract information. On this basis, when the abstract information is shown in the target showing area, a second number identifier may be shown synchronously. The second number identifier is in the form of "P/Q", wherein P represents that the abstract information of a P-th object is currently being shown, and there are a total of Q pieces of abstract information.

Exemplarily, with continued reference to Fig. 6, in the target showing area (i.e., the showing area 1), "1/2" is marked at the left bottom of the image showing area, wherein "1/2" is the second number identifier, representing that there are pieces of abstract information of two target objects and the abstract information of the first object is currently being shown.

In Fig. 6, the second number identifier is located at the left bottom of the image showing area. this is a specific example of the present disclosure rather than a limiting of the present disclosure. In practice, the second number identifier may be any position of the target showing area.

On the basis of the above technical solutions, optionally, with reference to Fig. 5, if the experience assessment information is currently being shown in the target showing area and the experience assessment information includes a link of the target object, the interaction method further includes: in response to a selection operation for the link of the target object, showing a detail page of the target object corresponding to the selected link.

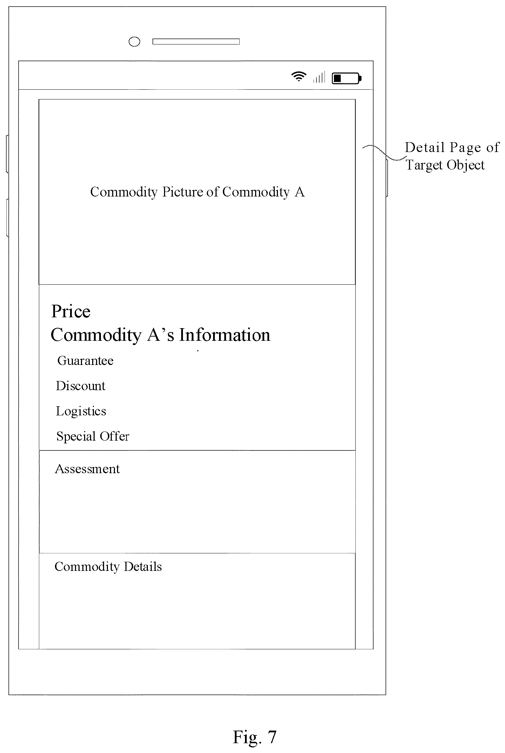

Fig. 7 is a schematic diagram of a detail page of a target object provided by an embodiment of the present disclosure. The detail page of the target object refers to a page for introducing all attribute information of the target object. Here, it needs to be noted that from the perspective of the contained quantity of the attribute information of the target object, the abstract information of the target object and the detail page of the target object may be both regarded as a set of the attribute information of the target object, but the quantity of information included in the detail page of the target object is greater than the quantity of information included in the abstract information of the target object. The abstract information of the target object is a subset of the detail page of the target object. Moreover, the user operates in the detail page of the target object and thus can place an order to buy the target object.

Optionally, with continued reference to Fig. 5, if the experience assessment information is currently being shown in the target showing area and the experience assessment information includes a jump control corresponding to the target object, the interaction method further includes: in response to a selection operation for the jump control of the target object, showing a detail page of the target object corresponding to the selected jump control. The selection operation for the jump control of the target object includes a tapping operation, a sliding operation, and the like for the jump control of the target object.

Showing the detail page of the target object corresponding to the selected link in response to the selection operation for the link or the jump control of the target object is substantially to provide a way for assisting the user with buying the target object so that the user can rapidly find all the attribute information of the target object and then buy the target object after being influenced with the target object.

On the basis of the above technical solution, optionally, the interaction method further includes: if the abstract information of the target object is currently being shown in the target showing area, in response to a triggering operation for the abstract information, showing a detail page of the target object corresponding to the triggered abstract information. The triggering operation for the abstract information includes a selection operation, a tapping operation, or a sliding operation for the abstract information.

Or, optionally, the interaction method further includes: if the abstract information of the target object is currently being shown in the target showing area and the abstract information includes a jump control corresponding to the target object, in response to a selection operation for the jump control of the target object, showing a detail page of the target object corresponding to the selected jump control. The selection operation for the jump control of the target object includes a tapping operation, a sliding operation, and the like for the jump control of the target object.

Showing the detail page of the target object corresponding to the triggered abstract information includes replacing the content sharing page with the detail page of the target object corresponding to the triggered abstract information.

This can also provide a way for assisting the user with buying the target object so that the user can rapidly find all the attribute information of the target object and then buy the target object after being influenced with the target object.

It should be noted that, for the sake of simplicity, the foregoing method embodiments are described as a series of action combinations, but those skilled in the art will recognize that the present disclosure is not limited by the sequence of actions described, and certain steps may be carried out in another order or at the same time according to the present disclosure. Secondly, it should be understood by those skilled in the art that the examples described in the specification are preferred examples and the involved actions and modules are not necessarily necessary for the present disclosure.

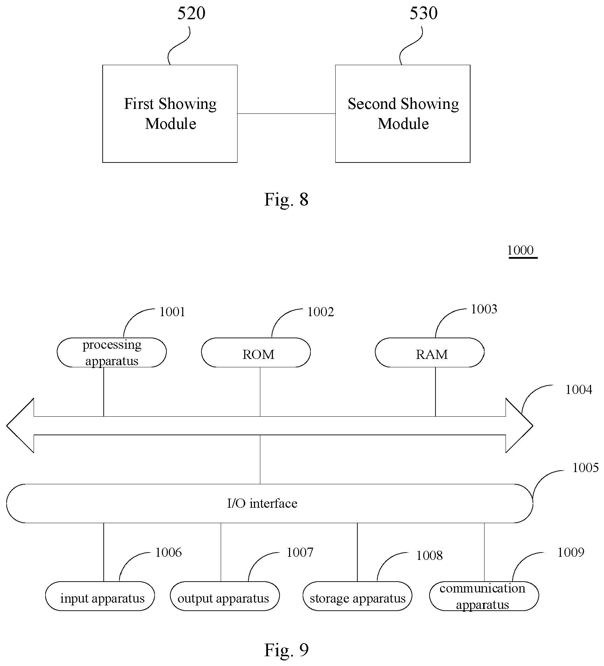

Fig. 8 is a structural schematic diagram of an interaction apparatus in an embodiment of the present disclosure. The interaction apparatus provided in the embodiment of the present disclosure may be configured in a client. With reference to Fig. 8, the interaction apparatus specifically includes: a first showing module 510 configured to show a content sharing page, wherein the content sharing page includes at least one showing area; one showing area is used for showing one piece of experience assessment information; and the experience assessment information is used for recommending a target object; and a second showing module 520 configured to show abstract information of a target object in a target showing area in response to a triggering operation for one piece of experience assessment information, wherein the target displaying area is a showing area where the triggered experience assessment information is displayed; the target object is an object recommended by the triggered experience assessment information; and the abstract information includes at least part of attribute information of the target object.

Further, the second showing module 520 is configured to: show the abstract information of the target object in the target showing area in response to a triggering operation for the last piece of first image information in the case that the experience assessment information currently shown in the target showing area includes at least two pieces of first image information and a last piece of first image information of the experience assessment information is currently being shown in the target showing area.

Further, the experience assessment information includes first label information; and the second showing module 520 is configured to: show the abstract information of the target object in the target showing area in response to a triggering operation for the first label information in one piece of experience assessment information.

Further, the target showing area includes an image showing area and a text showing area; the experience assessment information includes first image information and first text information; and the abstract information includes second image information and second text information.

The second showing module 520 is configured to: replace the first image information shown in the image showing area with the second image information; and replace the first text information shown in the text showing area with the second text information.

Further, the target object is a commodity; the first image information includes a use effect picture of the commodity provided by a first terminal; the first text information includes use experience text information of the commodity provided by the first terminal; the second image information includes a picture of the commodity provided by a second terminal; and the second text information includes at least one of identification information, popularity information, and assessment information of the commodity provided by the second terminal.

Further, if the abstract information is currently being shown in the target showing area and the abstract information includes second label information, the interaction apparatus further includes a third showing module configured to: switch the abstract information shown in the target showing area to the experience assessment information in response to a triggering operation for the second label information in the abstract information.

Further, in the case that the triggered experience assessment information is used for recommending at least two target objects and the abstract information of one of the target objects is currently being shown in the target showing area, the interaction apparatus further includes a fourth showing module configured to: switch the abstract information shown in the target showing area in response to a switching operation for the abstract information, wherein the abstract information before switching and the abstract information after switching correspond to different target objects, respectively.

Further, the interaction apparatus further includes a fifth showing module configured to: in the case that the experience assessment information is currently being shown in the target showing area and the experience assessment information includes a link of the target object, show a detail page of the target object corresponding to the selected link in response to a selection operation for the link of the target object; and/or, in the case that the experience assessment information is currently being shown in the target showing area and the experience assessment information includes a jump control corresponding to the target object, show a detail page of the target object corresponding to the selected jump control in response to a selection operation for the jump control of the target object.

Further, the interaction apparatus further includes the fifth showing module configured to: show a detail page of the target object corresponding to the triggered abstract information in response to a triggering operation for the abstract information in the case that the abstract information of the target object is currently being shown in the target showing area.

The interaction apparatus provided in the embodiments of the present disclosure may perform the steps performed by a client in the interaction method provided in the embodiments of the present disclosure, and specific steps and beneficial effects are not described here redundantly.

FIG. 9 illustrates a schematic structural diagram of an electronic device provided by an embodiment of the present disclosure. Referring to FIG. 9, FIG. 9 illustrates a schematic structural diagram of an electronic device 1000 suitable for implementing some embodiments of the present disclosure. The electronic device 1000 in some embodiments of the present disclosure may include but are not limited to mobile terminals such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal), a wearable electronic device or the like, and fixed terminals such as a digital TV, a desktop computer, or the like. The electronic device illustrated in FIG. 9 is merely an example, and should not pose any limitation to the functions and the range of use of the embodiments of the present disclosure.

As illustrated in FIG. 9, the electronic device 1000 may include a processing apparatus 1001 (e.g., a central processing unit, a graphics processing unit, etc.), which can perform various suitable actions and processing according to a program stored in a read-only memory (ROM) 1002 or a program loaded from a storage apparatus 1008 into a random-access memory (RAM) 1003. The RAM 1003 further stores various programs and data required for operations of the electronic device 1000. The processing apparatus 1001, the ROM 1002, and the RAM 1003 are interconnected by means of a bus 1004. An input/output (I/O) interface 1005 is also connected to the bus 1004.

Usually, the following apparatus may be connected to the I/O interface 1005: an input apparatus 1006 including, for example, a touch screen, a touch pad, a keyboard, a mouse, a camera, a microphone, an accelerometer, a gyroscope, or the like; an output apparatus 1007 including, for example, a liquid crystal display (LCD), a loudspeaker, a vibrator, or the like; a storage apparatus 1008 including, for example, a magnetic tape, a hard disk, or the like; and a communication apparatus 1009. The communication apparatus 1009 may allow the electronic device 1000 to be in wireless or wired communication with other devices to exchange data. While FIG. 9 illustrates the electronic device 1000 having various apparatuses, it should be understood that not all of the illustrated apparatuses are necessarily implemented or included. More or fewer apparatuses may be implemented or included alternatively.

Particularly, according to some embodiments of the present disclosure, the processes described above with reference to the flowcharts may be implemented as a computer software program. For example, some embodiments of the present disclosure include a computer program product, which includes a computer program carried by a non-transitory computer-readable medium. The computer program includes program codes for performing the methods shown in the flowcharts. In such embodiments, the computer program may be downloaded online through the communication apparatus 1009 and installed, or may be installed from the storage apparatus 1008, or may be installed from the ROM 1002. When the computer program is executed by the processing apparatus 1001, the above-mentioned functions defined in the methods of some embodiments of the present disclosure are performed.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program codes. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including but not limited to an electric wire, a fiber-optic cable, radio frequency (RF) and the like, or any appropriate combination of them.

In some implementation modes, the client and the server may communicate with any network protocol currently known or to be researched and developed in the future such as hypertext transfer protocol (HTTP), and may communicate (via a communication network) and interconnect with digital data in any form or medium. Examples of communication networks include a local area network (LAN), a wide area network (WAN), the Internet, and an end-to-end network (e.g., an ad hoc end-to-end network), as well as any network currently known or to be researched and developed in the future.

The above-mentioned computer-readable medium may be included in the above-mentioned electronic device, or may also exist alone without being assembled into the electronic device.

The above-mentioned computer-readable medium carries one or more programs, and when the one or more programs are executed by the electronic device, the electronic device is caused to: show a content sharing page, wherein the content sharing page comprises at least one showing area; one showing area is used for showing one piece of experience assessment information; and the experience assessment information is used for recommending an object; and show abstract information of a target object in a target showing area in response to a triggering operation for one piece of experience assessment information, wherein the target displaying area is a showing area where the triggered experience assessment information is displayed; the target object is an object recommended by the triggered experience assessment information; and the abstract information comprises at least part of attribute information of the target object.

Optionally, when the above one or more programs are executed by the electronic device, the electronic device may be caused to execute other steps in the above embodiments.

The computer program codes for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the accompanying drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules or units involved in the embodiments of the present disclosure may be implemented in software or hardware. Among them, the name of the module or unit does not constitute a limitation of the unit itself under certain circumstances.

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

According to one or more embodiments of the present disclosure, the present disclosure provides an electronic device comprising: one or more processors, and a storage apparatus configured to store one or more programs, wherein the one or more programs, when executed by the one or more processors, cause the one or more processors to implement any one interaction method provided by the present disclosure.

According to one or more embodiments of the present disclosure, the present disclosure provides a computer-readable storage medium, storing a computer program which, when executed by a processor, causes any one interaction method provided by the present disclosure to be implemented.

An embodiment of the present disclosure further provides a computer program product, including a computer program/instructions which, when executed by a processor, cause/causes the interaction method described in the embodiments of the present disclosure to be implemented.

It should be noted that relational terms herein such as "first" and "second" are merely used to distinguish one entity or operation from another entity or operation without necessarily requiring or implying any actual such relationship or order between such entities or operations. In addition, terms "include", "comprise", or any other variations thereof are intended to cover a non-exclusive inclusion, so that a process, a method, an article, or a device including a series of elements not only includes those elements, but also includes other elements that are not explicitly listed, or also includes inherent elements of the process, the method, the article, or the device. Without more restrictions, the elements defined by the sentence "including a ..." do not exclude the existence of other identical elements in the process, method, article, or device including the elements.

The foregoing are descriptions of specific embodiments of the present disclosure, allowing a person skilled in the art to understand or implement the present disclosure. A plurality of amendments to are apparent to those skilled in the art, and general principles defined herein can be achieved in the other examples without departing from the spirit or scope of the present disclosure. Thus, the present disclosure will not be limited to these examples shown herein, but shall accord with the widest scope consistent with the principles and novel characteristics disclosed herein.

## Claims

1. An interaction method, comprising:
showing a content sharing page, wherein the content sharing page comprises at least one showing area; one showing area is used for showing one piece of experience assessment information; and the experience assessment information is used for recommending an object; and
showing abstract information of a target object in a target showing area in response to a triggering operation for one piece of experience assessment information, wherein the target displaying area is a showing area where the triggered experience assessment information is displayed; the target object is an object recommended by the triggered experience assessment information; and the abstract information comprises at least part of attribute information of the target object.

2. The interaction method according to claim 1, wherein the showing abstract information of a target object in a target showing area in response to a triggering operation for one piece of experience assessment information comprises:
in a case where the experience assessment information currently shown in the target showing area comprises at least two pieces of first image information and a last piece of first image information of the experience assessment information is currently being shown in the target showing area, showing the abstract information of the target object in the target showing area in response to a triggering operation for the last piece of first image information.

3. The interaction method according to claim 1, wherein the experience assessment information comprises first label information; and the showing abstract information of a target object in a target showing area in response to a triggering operation for one piece of experience assessment information comprises:
showing the abstract information of the target object in the target showing area in response to a triggering operation for the first label information in the one piece of experience assessment information.

4. The interaction method according to any one of claims 1 to 3, wherein the target showing area comprises an image showing area and a text showing area; the experience assessment information comprises first image information and first text information; and the abstract information comprises second image information and second text information; and
the showing abstract information of a target object in a target showing area comprises:
replacing the first image information shown in the image showing area with the second image information; and
replacing the first text information shown in the text showing area with the second text information.

5. The interaction method according to claim 4, wherein:
the target object is a commodity;
the first image information comprises a use effect picture of the commodity provided by a first terminal;
the first text information comprises use experience text information of the commodity provided by the first terminal;
the second image information comprises a picture of the commodity provided by a second terminal; and
the second text information comprises at least one of identification information, popularity information, and assessment information of the commodity provided by the second terminal.

6. The interaction method according to any one of claims 1 to 5, wherein in a case where the abstract information is currently being shown in the target showing area and the abstract information comprises second label information, the interaction method further comprises:
switching the abstract information shown in the target showing area to the experience assessment information in response to a triggering operation for the second label information in the abstract information.

7. The interaction method according to any one of claims 1 to 6, wherein in a case where the triggered experience assessment information is used for recommending at least two target objects and the abstract information of one of the target objects is currently being shown in the target showing area, the interaction method further comprises:
switching the abstract information shown in the target showing area in response to a switching operation for the abstract information, wherein the abstract information before switching and the abstract information after switching correspond to different target objects, respectively.

8. The interaction method according to any one of claims 1 to 7, wherein:
in a case where the experience assessment information is currently being shown in the target showing area and the experience assessment information comprises a link of the target object, the interaction method further comprises:
showing a detail page of the target object corresponding to the selected link in response to a selection operation for the link of the target object;
and/or
in a case where the experience assessment information is currently being shown in the target showing area and the experience assessment information comprises a jump control corresponding to the target object, the interaction method further comprises:
showing a detail page of the target object corresponding to the selected jump control in response to a selection operation for the jump control of the target object.

9. The interaction method according to any one of claims 1 to 8, further comprising:
in a case where the abstract information of the target object is currently being shown in the target showing area, showing a detail page of the target object corresponding to the triggered abstract information in response to a triggering operation for the abstract information.

10. An interaction apparatus, comprising:
a first showing module configured to show a content sharing page, wherein the content sharing page comprises at least one showing area; one showing area is used for showing one piece of experience assessment information; and the experience assessment information is used for recommending a target object; and
a second showing module configured to show abstract information of a target object in a target showing area in response to a triggering operation for one piece of experience assessment information, wherein the target displaying area is a showing area where the triggered experience assessment information is displayed; the target object is an object recommended by the triggered experience assessment information; and the abstract information comprises at least part of attribute information of the target object.

11. An electronic device, comprising:
one or more processors; and
a storage apparatus configured to store one or more programs,
wherein the one or more programs, when executed by the one or more processors, cause the one or more processors to implement the interaction method according to any one of claims 1 to 9.

12. A computer-readable storage medium, storing a computer program which, when executed by a processor, causes the interaction method according to any one of claims 1 to 9 to be implemented.
